(19)

Europäisches
Patentamt
European
Patent Office
Office européen
des brevets

(11) **EP 4 484 114 A1**

(12) **EUROPEAN PATENT APPLICATION**

(43) Date of publication:
**01.01.2025  Bulletin 2025/01**

(21) Application number: **24185673.1**

(22) Date of filing: **01.07.2024**

(51) International Patent Classification (IPC):
***B29C 45/26*** *(2006.01)*    ***B29C 33/38*** *(2006.01)*
***G06F 30/17*** *(2020.01)*    ***G06F 30/23*** *(2020.01)*
***G06F 113/22*** *(2020.01)*

(52) Cooperative Patent Classification (CPC):
**B29C 33/3835; B29C 45/2606; G06F 30/17;
G06F 30/20; G06F 30/23;** G06F 2113/22

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.06.2023  PT 2023118786**

(71) Applicants:
• **Simoldes Aços S A
3720-502 Santiago de Riba-Ul (PT)**
• **INEGI - Instituto de Ciência e Inovação em
Engenharia Mecânica e Engenharia Industrial
4200-465 Porto (PT)**

(72) Inventors:
• **Barbosa, Carlos
3720-502 Santiago de Riba-Ul (PT)**
• **Resende, Cedric
3720-502 Santiago de Riba-Ul (PT)**
• **Fernandes, Maria João
3720-502 Santiago de Riba-Ul (PT)**
• **Martins, Nuno
3720-502 Santiago de Riba-Ul (PT)**

• **Monteiro, Jaime
Aptdo 113-Bec B Oliveira de Azeméis (PT)**
• **Grilo, Júlio
Aptdo 113-Bec B Oliveira de Azeméis (PT)**
• **Machado, João
4200-465 PORTO (PT)**
• **Akhavan, Hamed
4200-465 PORTO (PT)**
• **Gomes, Rui
4200-465 PORTO (PT)**
• **Baldaia, Margarida
4200-465 PORTO (PT)**
• **Vieira, Tiago
4200-465 PORTO (PT)**
• **Correia, Nuno
4200-465 PORTO (PT)**
• **Gomes, Carla
4200-465 PORTO (PT)**
• **Fernandes, Pedro
4200-465 PORTO (PT)**

(74) Representative: **Patentree
Edificio Net
Rua de Salazares, 842
4149-002 Porto (PT)**

(54) **METHOD FOR MANUFACTURING AN INJECTION MOULDING MOULD AND INJECTION MOULD THEREOF**

(57)    The present disclosure relates to a method and device for manufacturing an injection mould, and respective injection mould thereof, including the dimensioning of an interlock for alignment of mould parts, said interlock having a width (W) and comprising an inclined interlock lateral surface having a length (L) and height (H), said width and height defining an interlock aspect ratio (A) of width (W) divided by height (H), and including the dimensioning the interlock aspect ratio (A) as plurality of discrete points, each being a real number distributed between a predetermined minimum and maximum of interlock aspect ratio (A).

The computer-implemented method for manufacturing an injection mould including the dimensioning of an interlock for alignment of mould parts, said interlock being an indexing tapering plane having a rectangular parallelepiped shape having a width (W) and comprising an inclined interlock lateral surface having a length (L) and height (H), said width and height defining an interlock aspect ratio (A) of width (W) divided by height (H), the method comprising the following steps:
receiving a digital model of an initial injection mould, wherein said digital model does not include interlocks;
receiving a predetermined maximum permissible displacement for locking of said injection mould;
receiving a predetermined maximum length of the interlock lateral surface to be placed on said digital model;
receiving a predetermined minimum and maximum of interlock aspect ratio (A);
carrying out a static mould injection simulation of the digital model to obtain direction and intensity of lateral force to be met by the interlock lateral surface;

dimensioning the interlock aspect ratio (A) as plurality of discrete points, each being a real number distributed between said predetermined minimum and maximum of interlock aspect ratio (A);

for each interlock aspect ratio (A) point, calculating a minimum of length (L) which is required for sustaining said lateral force while keeping below said predetermined maximum permissible displacement;

excluding the interlock aspect ratio (A) points for which the calculated length exceeds the predetermined maximum length;

outputting the interlock aspect ratio (A) points which have not been excluded,

with respective calculated length for each point.

**Fig. 1A**

## Description

## TECHNICAL FIELD

The present disclosure relates to a method for manufacturing an injection moulding mould, preferably a method for manufacturing a plastic injection moulding mould, and injection mould thereof.

## BACKGROUND

Injection moulds comprise as two or more parts, for example named as a core half and a cavity half from which mould-injected products are extracted. For each cycle, the mould parts should be aligned to ensure quality of the mould-injected products. When two mould parts are used, they can also be named mould halves.

This alignment is usually ensured by guide couplings, for example a guide pillar and a guide bush, each arranged on said mould parts. For example, four guide pillars and guide bushes can be used. They serve to keep the injection mould located while the plastic is being injected under tremendous pressure. These are usually tapered and help maintain alignment in critical conditions.

Rectangular cross-section tapered wedges provide moulds with interlocks having positive metal-to-metal alignment between mould parts or mould halves. This kind of interlocks is able to provide significantly higher strength in aligning mould parts or mould halves than, for example, guide pillars and a guide bushes. Rectangular cross-section interlocks provide lateral surfaces that are able to withstand higher lateral forces.

Along this description, these interlocks, or locks, may be interchangeably described as rectangular cross-section tapered wedges, indexing tapering planes having a rectangular parallelepiped shape, brake elements, blocking elements, or alignment brakes.

By combining rectangular cross-section interlocks in orthogonal directions, misalignment efforts in all directions can be mitigated. These interlocks thus provide superior alignment while also permitting thermal expansion between mould halves.

Precision in location is critical to avoid misalignment problems which would result from uneven thermal expansion of the individual mould plates. it is very important to machine each set of interlocks with high accuracy in both alignment and fit.

However, dimensioning this kind of interlocks brings significant issues.

These facts are disclosed in order to illustrate the technical problem addressed by the present disclosure.

## GENERAL DESCRIPTION

The present disclosure relates to a method for manufacturing an injection moulding mould, preferably a method for manufacturing a plastic injection moulding mould, and injection mould thereof.

As previously disclosed, and known from the prior art, rectangular cross-section interlocks provide superior alignment while also permitting thermal expansion between mould halves.

However, rectangular cross-section interlocks take more space that guide pillars and are more complex to size as they require two dimensioning variables, width (W) and length (L), versus guide pillars, which only require only variable, radius. Of course, both interlocks have a specific height (H) to be dimensioned but this height is usually already determined by the height and/or vertical dimensions of the mould half or even specified by prior design.

In particular, when interlocks have pads (also interchangeably described as plates) in the wedge alignment surfaces for making positive contact with a matching surface of the wedge-shaped recess, dimensioning requires choosing an optimal (integer) number of plates to be used in each wedge alignment surface.

It is thus disclosed a computer-implemented method for manufacturing an injection mould including the dimensioning of an interlock for alignment of mould parts, said interlock being a rectangular cross-section tapered wedge or wedge-shaped recess, having a width (W) and comprising an inclined interlock lateral surface having a length (L) and height (H), said width and height defining an interlock aspect ratio (A) of width (W) divided by height (H), the method comprising the following steps:

  receiving a digital model of an initial injection mould, wherein said digital model does not include interlocks;

  receiving a predetermined maximum permissible displacement for locking of said injection mould;

  receiving a predetermined maximum length of the interlock lateral surface to be placed on said digital model;

  receiving a predetermined minimum and maximum of interlock aspect ratio (A);

  carrying out a static mould injection simulation of the digital model to obtain direction and intensity of lateral force to be met by the interlock lateral surface;

  dimensioning the interlock aspect ratio (A) as plurality of discrete points, each being a real number distributed between said predetermined minimum and maximum of interlock aspect ratio (A);

  for each interlock aspect ratio (A) point, calculating a minimum of length (L) which is required for sustaining said lateral force while keeping below said predetermined maximum permissible displacement;

  excluding the interlock aspect ratio (A) points for which the calculated length exceeds the predetermined maximum length;

  outputting the interlock aspect ratio (A) points which have not been excluded, with respective calculated length for each point.

An embodiment further comprises, for each interlock aspect ratio (A) point which has not been excluded, the steps of:

receiving a predetermined plate length of plates to be applied along the length of the interlock lateral surface;

calculating the number of required plates by dividing the calculated length by the received predetermined plate length;

rounding down said number of required plates;

outputting the number of required plates.

An embodiment further comprises, for each interlock aspect ratio (A) point which has not been excluded, the steps of:

receiving a predetermined plate length of plates to be applied along the length of the interlock lateral surface, and a receiving an inter-plate gap length;

calculating the number of required plates by dividing the calculated length by the received predetermined plate length previously added with the received inter-plate gap length;

rounding down said number of required plates;

outputting the number of required plates.

An embodiment further comprises:

receiving a choice of an interlock aspect ratio (A) point which has not been excluded;

outputting the digital model with an added interlock having the chosen interlock aspect ratio (A) point, respective calculated length, and, if applicable, the respective number of required plates.

An embodiment further comprises outputting metal machining device instructions that, when carried out by metal machining device, cause it to produce the injection mould as defined by the outputted digital model.

An embodiment further comprises providing to a metal machining device said instructions to produce the injection mould as defined by the outputted digital model.

In an embodiment, the dimensioned interlock aspect ratio (A) points are distributed in discrete points equally spaced between said predetermined minimum and maximum of interlock aspect ratio (A).

In an embodiment, the indexing tapering plane having a rectangular parallelepiped shape is a wedge or a wedge-shaped recess.

It is also disclosed a computer-implemented method for manufacturing an injection mould including the dimensioning of an interlock for alignment of mould parts comprising two orthogonally-arranged inclined interlock lateral surfaces or including the dimensioning of two orthogonally-arranged interlocks for mould part alignment each comprising an inclined interlock lateral surface, each said interlock being a rectangular cross-section tapered wedge or wedge-shaped recess, having a width (W) and comprising an inclined interlock lateral surface having a length (L) and height (H), comprising, for each orthogonal direction, carrying out the method according to any of the previous claims.

It is also disclosed a computer device arranged to carry out any of the described methods.

It is also disclosed a non-transitory computer-readable medium comprising computer program instructions for implementing a computer-implemented method for manufacturing an injection mould, which when executed by a processor, cause the processor to carry out any of the methods described.

An embodiment further comprises an injection mould obtainable by any of the methods described.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

Where elements are described as being connected or connectable, they may be directly connected. Where elements are described as being coupled or coupleable, they may be linked by one or more intervening or interposing elements.

**BRIEF DESCRIPTION OF THE DRAWINGS**

The following figures provide preferred embodiments for illustrating the disclosure and should not be seen as limiting the scope of invention.

**Figure 1A:** Schematic representation of a rectangular cross-section tapered wedge interlock for providing positive metal-to-metal alignment between mould halves, having a wedge (1) with inclined interlock lateral surface (10) and a matching wedge-shaped recess (2) with inclined interlock lateral surface (20).

**Figure 1B:** Schematic representation of a top view of two rectangular cross-section tapered wedge interlocks having different aspect ratios, i.e. a different width to length ratio, each having interlock lateral surfaces (30, 40) of different lengths (30, 40). Although Fig. 1B shows interlocks with two opposing alignment surfaces, interlocks may only provide a first alignment surface and a complementary interlock will provide the second alignment surface.

**Figure 1C:** Schematic representation of a top view of two rectangular cross-section tapered wedge interlocks having different aspect ratios, i.e. a different width to length ratio, and having a different number of pads (50), also interchangeably described as plates - here, two or three pads - in each wedge alignment surface.

**Figure 2:** Schematic representation of a mould structural analysis and optimization process in three auxiliary features of the mould: interlocks, pillars and thickness optimization.

**Figure 3:** Schematic representation of 3D diagram of the interlock dimensions of width (W), length (L), height (H), and force (F) applied to the interlock lateral surface for sustaining the alignment of the mould parts.

**Figure 4:** Graphical analysis of the results of the implementation of the disclose method for interlock/brake design.

## DETAILED DESCRIPTION

The present disclosure relates to a method for manufacturing an injection moulding mould, preferably a method for manufacturing a plastic injection moulding mould, and injection mould thereof.

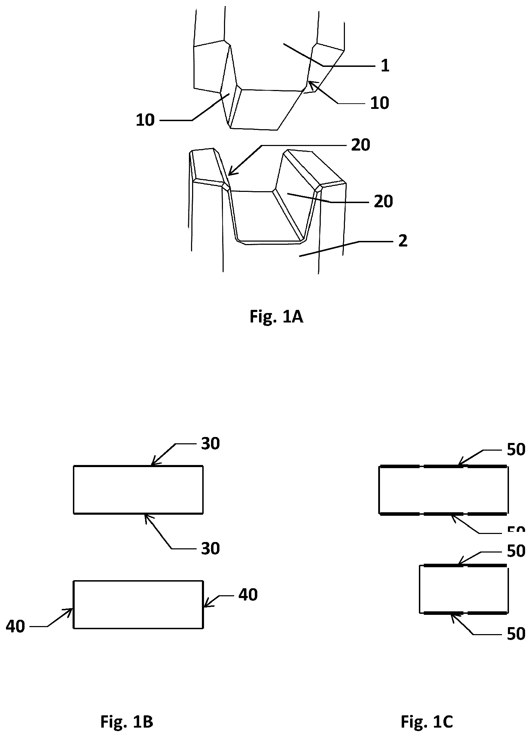

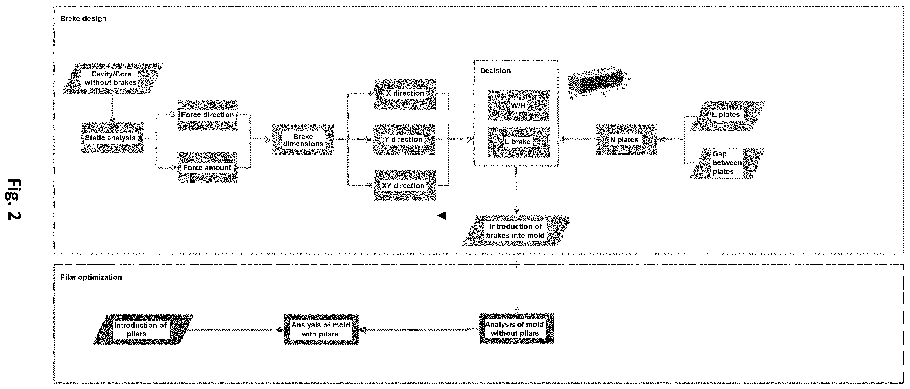

One of the objectives of this method is to introduce a set of models to be integrated into current mould development methodologies (Figure 1), it began with a study focused on the mould modelling phase. Based on all previously, studies and structural analysis, performed, a new structural study sequence identified in Figure 2 was developed.

After the model preparation phase, the structural study is divided into three distinct zones:

 I. Structural analysis;
 II. implementation of optimization methodologies;
 III. Validation of the results obtained.

With the realization of several studies and, later, the collection and analysis of the results, it was possible to create new methodologies for the optimization of the mould, which during the structural analysis will be implemented in phase II. In this stage, three new methodologies were integrated (Figure 2), in order to structurally optimize some of the mould components, namely:

 A. Designing of the lock;
 B. Optimization of the pillars;
 C. Dimensional optimization of the mould, including thicknesses.

The following pertains to designing of the lock. In an embodiment, the flowchart of the methodology that involves the lock design is presented in Figure 2. The initial step of such design is the analysis of the cavity and core without locks, with injection pressure inside, where the direction of the displacements as well as the resulting forces are defined. With this, the first step in the design of the locks is to carry out the static analysis.

Next, it is necessary to define a maximum permissible displacement for locking. Thus, after defining the displacement, force and direction, in either in-plane directions, x or y, the phase of calculating the dimensions of the lock begins.

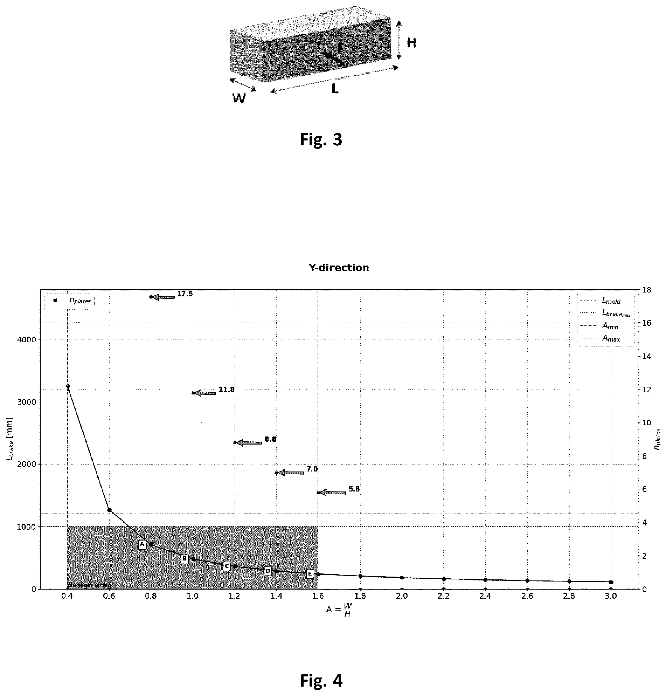

Thus, after defining these parameters, the length of the lock (L) is calculated, as well as its height (H) and width (W), as identified in Figure 3. Furthermore, considering the width of the brake shim plates and the gap between them, the number of plates is also calculated.

In order to facilitate the discussions of the results, the results for a chosen typical mould are presented in the form of a graph as shown in Figure 4. The curve represents the variation in the length of the lock (L) as a function of parameter A, which is the quotient between the width and height of the lock. The shaded area, called "Design Area" represents the useful region for dimensioning the lock. This is defined by the user by defining two vertical lines, $A_{min}$ and $A_{max}$, and a horizontal line corresponding to the maximum permissible braking length value ($L_{brake\ max}$). With the definition of this design area, it is observed that, in a chosen typical mould, there are for example 5 dimensional solutions for the locking identified by points A, B, C, D and E. Each of these points is associated with a different combination of dimensions as shown in Table 1. Furthermore, depending on the choice of the width of the shim plates and the gap between them, the number of plates for the calculated locking length is calculated.

Finally, the last step of the method is the choice of one of the solutions presented in the Table 1, so that the dimensioned locking can be added to the mould drawing later.

Table 1 - Results obtained within the design area for the lock dimensions **Design Area (yy)**

| | $L_{brakemax}$ [mm] | $A = \dfrac{W}{H}$ | $n_{plates}$ |
|---|---|---|---|
| A | 711 | 0.8 | 17.5 |
| B | 481 | 1.0 | 11.8 |
| C | 361 | 1.2 | 8.8 |
| D | 289 | 1.4 | 7.0 |
| E | 241 | 1.6 | 5.8 |

The following pertains to the addition of the pillars. In an embodiment, in order to control the structural behaviour of the mould, specifically in the displacements experienced in the core towards the opening of the mould, some pillars are introduced. The existence of these displacements strongly influences the optimization of the core thickness. Thus, a methodology was created for the introduction of the pillars in the preliminary mould so that, later, thickness optimization can be applied in the mould.

The method (explained in the flowchart given in Figure 2) has three phases with the first one, defined as the static analysis of the mould without pillars, to identify the areas with displacements greater than the admissible limit value in the core. Then, pillars are distributed in this region and the mould is structurally analysed again. If the displacements obtained are less than or equal to the permissible limit value, the pillar insertion process is completed. On the contrary, if the displacements are larger, more columns must be inserted until this displacement check is validated.

The following pertains to mould dimensional optimization. In an embodiment, in addition to the methodology presented above, the possibility of integrating at this stage, topological optimization tools in the steel blocks of the core and cavity were also analysed. This optimization makes it possible to obtain lighter components while maintaining their initial stiffness. This analysis is implemented directly in Ansys (as explained in flowchart in Figure 2), through the execution of a specific tool for topological optimization of the thickness of core and cavity. In a typical mould, it was possible to reduce 15% in the weight of core and cavity mould after the preceding optimizations.

The term "comprising" whenever used in this document is intended to indicate the presence of stated features, integers, steps, components, but not to preclude the presence or addition of one or more other features, integers, steps, components or groups thereof.

Flow diagrams of particular embodiments of the presently disclosed methods are depicted in figures. The flow diagrams illustrate the functional information one of ordinary skill in the art requires to perform said methods required in accordance with the present disclosure.

It is to be appreciated that certain embodiments of the disclosure as described herein may be incorporated as code (e.g., a software algorithm or program) residing in firmware and/or on computer useable medium having control logic for enabling execution on a computer system having a computer processor, such as any of the servers described herein. Such a computer system typically includes memory storage configured to provide output from execution of the code which configures a processor in accordance with the execution. The code can be arranged as firmware or software, and can be organized as a set of modules, including the various modules and algorithms described herein, such as discrete code modules, function calls, procedure calls or objects in an object-oriented programming environment. If implemented using modules, the code can comprise a single module or a plurality of modules that operate in cooperation with one another to configure the machine in which it is executed to perform the associated functions, as described herein.

The disclosure should not be seen in any way restricted to the embodiments described and a person with ordinary skill in the art will foresee many possibilities to modifications thereof. The above described embodiments are combinable. The following claims further set out particular embodiments of the disclosure.

**Claims**

1. Computer-implemented method for manufacturing an injection mould including the dimensioning of an interlock for alignment of mould parts, said interlock being an indexing tapering plane having a rectangular parallelepiped shape having a width (W) and comprising an inclined interlock lateral surface having a length (L) and height (H), said width and height defining an interlock aspect ratio (A) of width (W) divided by height (H), the method comprising the following steps:

   receiving a digital model of an initial injection mould, wherein said digital model does not include interlocks;
   receiving a predetermined maximum permissible displacement for locking of said injection mould;
   receiving a predetermined maximum length of the interlock lateral surface to be placed on said digital model;
   receiving a predetermined minimum and maximum of interlock aspect ratio (A);
   carrying out a static mould injection simulation of the digital model to obtain direction and intensity of lateral force to be met by the interlock lateral surface;
   dimensioning the interlock aspect ratio (A) as plurality of discrete points, each being a real number distributed between said predetermined minimum and maximum of interlock aspect ratio (A);
   for each interlock aspect ratio (A) point, calculating a minimum of length (L) which is required for sustaining said lateral force while keeping below said predetermined maximum permissible displacement;
   excluding the interlock aspect ratio (A) points for which the calculated length exceeds the predetermined maximum length;
   outputting the interlock aspect ratio (A) points which have not been excluded,
   with respective calculated length for each point.

2. Method according to claim 1, further comprising, for each interlock aspect ratio (A) point which has not been excluded, the steps of:

receiving a predetermined plate length of plates to be applied along the length of the interlock lateral surface;

calculating the number of required plates by dividing the calculated length by the received predetermined plate length;

rounding down said number of required plates;

outputting the number of required plates.

3. Method according to claim 1, further comprising, for each interlock aspect ratio (A) point which has not been excluded, the steps of:

receiving a predetermined plate length of plates to be applied along the length of the interlock lateral surface, and a receiving an inter-plate gap length;

calculating the number of required plates by dividing the calculated length by the received predetermined plate length previously added with the received inter-plate gap length;

rounding down said number of required plates;

outputting the number of required plates.

4. Method according to any of the previous claims, further comprising:

receiving a choice of an interlock aspect ratio (A) point which has not been excluded;

outputting the digital model with an added interlock having the chosen interlock aspect ratio (A) point, respective calculated length, and, if applicable, the respective number of required plates.

5. Method according to the previous claim, further comprising outputting metal machining device instructions that, when carried out by metal machining device, cause it to produce the injection mould as defined by the outputted digital model.

6. Method according to the previous claim, further comprising providing to a metal machining device said instructions to produce the injection mould as defined by the outputted digital model.

7. Method according to any of the previous claims wherein the dimensioned interlock aspect ratio (A) points are distributed in discrete points equally spaced between said predetermined minimum and maximum of interlock aspect ratio (A).

8. Method according to any of the previous claims wherein the indexing tapering plane having a rectangular parallelepiped shape is a wedge or a wedge-shaped recess.

9. Computer-implemented method for manufacturing an injection mould including the dimensioning of an interlock for alignment of mould parts comprising two orthogonally-arranged inclined interlock lateral surfaces or including the dimensioning of two orthogonally-arranged interlocks for mould part alignment each comprising an inclined interlock lateral surface, each said interlock being an indexing tapering plane having a rectangular parallelepiped shape having a width (W) and comprising an inclined interlock lateral surface having a length (L) and height (H), comprising, for each orthogonal direction, carrying out the method according to any of the previous claims.

10. Computer device arranged to carry out the method of any of the claims 1-9.

11. Non-transitory computer-readable medium comprising computer program instructions for implementing a computer-implemented method for manufacturing an injection mould, which when executed by a processor, cause the processor to carry out the method of any of the claims 1-9.

12. Injection mould obtainable by the method of any of the claims 1-9.

**Fig. 1A**

**Fig. 1B**

**Fig. 1C**

**Fig. 2**

**Fig. 3**

**Fig. 4**

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 121 267 B1 (ACCURA TEC INC [US]) 25 March 2015 (2015-03-25) | 10,12 | INV. B29C45/26 |
| A | * Claim 1; para. [0032]; fig. 5, 6 * ----- | 1-9,11 | B29C33/38 G06F30/17 |
| A | EP 2 712 340 B1 (PROGRESSIVE COMPONENTS INT [US]) 4 May 2016 (2016-05-04) * Claim 1; fig. 1, 2 * ----- | 1,11 | G06F30/23 ADD. G06F113/22 |

TECHNICAL FIELDS SEARCHED     (IPC)

B29C
G06F

The present search report has been drawn up for all claims

| Place of search | Date of completion of the search | Examiner |
|---|---|---|
| Munich | 28 October 2024 | Härtig, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...............................................................................................

& : member of the same patent family, corresponding document

EPO FORM 1503 03.82 (P04C01)

## EP 4 484 114 A1

### ANNEX TO THE EUROPEAN SEARCH REPORT
### ON EUROPEAN PATENT APPLICATION NO.

EP 24 18 5673

This annex lists the patent family members relating to the patent documents cited in the above-mentioned European search report.
The members are as contained in the European Patent Office EDP file on
The European Patent Office is in no way liable for these particulars which are merely given for the purpose of information.

28-10-2024

| Patent document cited in search report | | Publication date | Patent family member(s) | | Publication date |
|---|---|---|---|---|---|
| EP 2121267 | B1 | 25-03-2015 | EP | 2121267 A1 | 25-11-2009 |
| | | | US | 2008286397 A1 | 20-11-2008 |
| | | | WO | 2008098022 A1 | 14-08-2008 |
| EP 2712340 | B1 | 04-05-2016 | BR | 112013029359 A2 | 24-01-2017 |
| | | | CN | 103547428 A | 29-01-2014 |
| | | | EP | 2712340 A2 | 02-04-2014 |
| | | | ES | 2585079 T3 | 03-10-2016 |
| | | | KR | 20140034234 A | 19-03-2014 |
| | | | MX | 343349 B | 03-11-2016 |
| | | | PT | 2712340 T | 05-08-2016 |
| | | | US | 2012294968 A1 | 22-11-2012 |
| | | | WO | 2012162118 A2 | 29-11-2012 |

EPO FORM P0459

For more details about this annex : see Official Journal of the European Patent Office, No. 12/82